# EUROPÄISCHE PATENTSCHRIFT

(11) **EP 2 229 538 B1**
(45) Veröffentlichungstag und Bekanntmachung des Hinweises auf die Patenterteilung: **31.08.2011**
(21) Anmeldenummer: 09707111.2
(22) Anmeldetag: 05.03.2009
(51) Int. Cl.: F16B 5/04, F16B 25/10, F16B 35/04

(54) **BEFESTIGUNGSELEMENT UND ZUGEHÖRIGES VERFAHREN ZUM SETZEN**
FASTENING ELEMENT AND CORRESPONDING SETTING METHOD
ÉLÉMENT DE FIXATION ET SON PROCÉDÉ DE FIXAGE

(30) Priorität: 07.03.2008 DE 102008014840
(43) Veröffentlichungstag der Anmeldung: 22.09.2010
(73) Patentinhaber: Adolf Würth GmbH & Co. KG, 74653 Künzelsau (DE); Würth International AG, 7004 Chur (CH)
(72) Erfinder: FRANK, Uwe, 74629 Pfedelbach-Windischenbach (DE)
(86) Internationale Anmeldenummer: PCT/EP2009/001548
(87) Internationale Veröffentlichungsnummer: WO 2009/109383

(56) Entgegenhaltungen:
- WO-A1-2004/055396
- WO-A2-2009/024311
- DE-A1- 19 535 537
- DE-A1-102006 002 238
- GB-A- 1 479 600
- GB-A- 2 038 979
- US-A- 2 703 419
- US-A- 4 355 466

## Beschreibung

Die Erfindung betrifft ein Befestigungselement insbesondere zur Verbindung von Bauteilen, mit dem eine Befestigung von einer Vorderseite aus erfolgen kann, ohne dass ein Zugriff auf die Rückseite erforderlich ist. Befestigungselemente dieser Art können beispielsweise Blindniete, Nägel oder selbstbohrende Schrauben sein.

Es ist bereits ein Nagel als Blindbefestigungselement bekannt (DE 102006002238A1), der mit hoher Geschwindigkeit ohne Drehung durch die im Fügebereich nicht vorgelochten Bauteile so eingetrieben wird, dass die Nagelspitze beide Bauteile vollständig durchdringt, bis die Unterseite des Nagelkopfs sich mit dem aufgeworfenen Material verbindet. Dieser Nagel kann eine rippenartige umlaufende Profilierung oder ein Gewinde zum Lösen der Verbindung aufweisen.

Aus der nachveröffentlichten WO 2009/024311 A2 sind Blindnieten zum Befestigen von Gegenständen aneinander bekannt. Die Blindniete werden axial in die Gegenstände eingeschossen oder eingestanzt und anschließend unter Einwirkung einer in die entgegen gesetzte Richtung wirkende Kraft verformt, um den Niet zu setzen.

Aus der DE 195 35 537 A1 ist ein Verfahren zum Einsetzen eines Bolzenelements in ein Blechteil bzw. in ein anderes, aus verformbaren Material bestehendes, plattenförmiges Bauteil bekannt, wobei das Bolzenelement ein Kopfteil und ein Schaftteil aufweist. Das Bolzenelement wird mit seinem vorderen Ende durch das Blechteil hindurchgeführt, wozu ein Setzkopf verwendet wird. Der Setzkopf arbeitet mit einer auf der dem Setzkopf abgewandten Seite des Blechteils angeordneten Matrize zusammen, wodurch das Bolzenelement im Bereich seines Kopfteils mit dem Blechelement vernietet wird. Um nun einen Gegenstand an dem Blechteil zu befestigen wird dieser auf den Schaftteil gesteckt und eine Mutter auf das Gewinde des Schaftteils geschraubt, wodurch dieser an dem Blechteil gehalten ist.

Aus der US 2,703,419A1 ist ein Werkzeug mit einer Stanzspitze und einem selbstschneidenden Gewinde bekannt. Mit dem Werkzeug kann ein Loch in ein Blechteil gestanzt werden, wobei auf der dem Werkzeug gegenüberliegenden Seite des Blechteils eine Matrize mit einem kreisförmigen Sackloch angeordnet ist. Wird das Werkzeug nach dem Stanzen eines Lochs in das Blechteil weiter in die Matrize gedrückt, so wird ein ringförmiger Abschnitt um das Stanzloch an die Innenwand des Sacklochs in der Matrize gedrückt. Folgend wird durch Rotation des Werkzeugs in den ringförmigen Abschnitt, der an der lochwand der Matrize anliegt, ein Gewinde geschnitten. Auf diese Weise wird eine "Mutter" mit Innengewinde aus dem ringförmigen Abschnitt gebildet, die einstückig mit dem Blechteil gebildet ist.

Aus der GB 1479600A ist eine Schraube bekannt, die eine ballistische Spitze, einen Schaft und einen Schraubenkopf aufweist, wobei der Schaft spitzenseitig gewindefrei ist und kopfseitig ein Gewinde aufweist. Das spitzenseitige Ende der Schraube kann durch zwei übereinander liegende Bleche derart geschossen werden, dass der gewindefreie Abschnitt in dem entstehenden Loch angeordnet ist. Anschließend wird mit einem weiteren Werkzeug die Schraube in das Loch geschraubt, um die Bleche miteinander zu verbinden.

Blindniete mit ballistischen Spitzen sind ebenfalls bekannt.

Der Erfindung liegt die Aufgabe zu Grunde, ein Befestigungselement zu schaffen, das einfach aufgebaut ist und unter den unterschiedlichsten Voraussetzungen gute Befestigungsergebnisse liefert.

Zur Lösung dieser Aufgabe schlägt die Erfindung ein Befestigungselement mit den im Anspruch 1 genannten Merkmalen vor. Die Erfindung schlägt ebenfalls ein Verfahren zum Setzen eines solchen Befestigungselements mit den im Anspruch 22 genannten Merkmalen vor.

Während bei dem eingangs genannten Befestigungselement (DE 10 2006 002 238 A1) das Loch durch starke Verformung der Bauteile mit den daraus resultierenden Verwerfungen erzeugt wird, wird mit dem Befestigungselement nach der Erfindung das Loch zunächst dadurch gebildet, dass ein Teil der beiden Bauteile oder mindestens eines der beiden Bauteile ausgestanzt wird. Dies führt zu einem deutlich sauberen Lochrand.

Das Befestigungselement nach der Erfindung weist eine Werkzeugangriffsausbildung auf, an der ein Werkzeug zum Durchführen des Stanzvorgangs angreift. Dies ist üblicherweise ein in Längsrichtung des Befestigungselements wirkendes Werkzeug, das durch eine ruckartige oder schlagartige Bewegung eine Kraft auf das Befestigungselement in dessen Längsrichtung ausübt.

Zum Durchführen des Befestigungsvorgangs ist ebenfalls eine Werkzeugangriffsausbildung vorgesehen, die gegebenenfalls auch mit der Werkzeugangriffsausbildung für den Stanzvorgang identisch sein kann. Es kann sich aber auch um eine andere Antriebsausbildung handeln, auch wenn für beide Vorgänge ein einziges Werkzeug vorgesehen sein kann.

In Weiterbildung der Erfindung kann vorgesehen sein, dass das Stanzende des Befestigungselements eine quer zur längsachse verlaufende Stirnfläche aufweist, die von einer im Wesentlichen vollständig umlaufenden Stanzkante begrenzt ist. Dadurch wird ein definierter Teil des Materials ausgestanzt. Bei einer vollständigen Stanzkante wird das Teil nach dem Ausstanzen vollständig entfernt. Es ist aber auch denkbar und sinnvoll, die Stanzkante nicht vollständig umlaufend auszubilden, sondern einen kleinen Teil des Umfangs mit einer abgerundeten Kontur zu versehen. Dann wird zwar auch ein Teil des Materials ausgestanzt, wobei der ausgestanzte Teil an einem kleinen Teil des Rands mit dem Ausgangsmaterial verbunden bleibt, so dass beim Durchführen des Befestigungsvorgangs dieses Teil nicht abfällt, sondern zur Seite weg gebogen wird.

Der Durchmesser der genannten Stirnfläche ist erfindungsgemäß kleiner als der Durchmesser des Schafts, und kann beispielsweise vorzugsweise in einem Bereich von etwa 30% bis 70%, vorzugsweise 40% bis 60% des Durchmessers des Schafts liegen.

Die Stirnfläche ist in ihrem Durchmesser kleiner als der Durchmesser des Schafts, dadurch gibt es erfindungsgemäß einen Übergangsbereich zwischen beiden Durchmessern, der hinter der Stirnfläche beginnt. Hier kann nun vorgesehen sein, dass das Stanzende des Befestigungselements hinter der Stirnfläche zylindrisch verläuft. Zylindrisch bedeutet, dass die Querschnittsgröße sich nicht ändert, auch nicht die Querschnittsform. Bei der Querschnittsform braucht es sich nicht um eine Kreisform zu handeln, wie auch die Stirnfläche selbst keine Kreisfläche zu sein braucht, jedoch wird die Kreisfläche oder zumindest eine angenäherte Kreisfläche als bevorzugt angesehen. Ebenfalls möglich ist eine Polygonform.

Anstelle eines zylindrisch verlaufenden Abschnitts kann erfindungsgemäß ebenfalls vorgesehen sein, dass hinter der Stirnfläche ein zunächst hinterschnittener Abschnitt vorhanden ist, wo sich also die Querschnittsgröße zunächst verringert, bis sie dann wieder kontinuierlich bis zum Durchmesser des Schafts zunimmt.

Ebenfalls möglich ist es, dass der Übergang zwischen dem Stanzende und dem Schaft mindestens teilweise konisch ausgebildet ist. Diese Konizität gilt sowohl dann, wenn hinter der Stirnfläche ein zylindrischer Abschnitt vorhanden ist, als auch dann, wenn dort ein Hinterschnitt gegeben ist.

Anstelle eines konischen Übergangs kann der Übergang mindestens teilweise konkav verlaufen. Beim direkten Übergang unmittelbar in den Schaft selbst kann auch eine leichte konvexe Krümmung in Art eines abgerundeten Übergangs gegeben sein.

Es wurde bereits erwähnt, dass die am Stanzende des Befestigungselements vorhandene Stirnfläche quer zur Längsrichtung des Befestigungselements beziehungsweise quer zur Achse des Befestigungselements verläuft. Damit soll ausgedrückt werden, dass ein Abweichen von einer senkrecht zur Längsachse verlaufenden Ebene ebenfalls umfasst sein soll.

Genauer gesagt kann vorgesehen sein, dass die vordere Stirnfläche in einer Ebene liegt. Diese Ebene kann sowohl exakt senkrecht zur Längsachse des Befestigungselements verlaufen, als auch leicht schräg dazu. Das leichte Abweichen von der Senkrechten hat zur Folge, dass der Stanzvorgang nicht an allen Stellen der Stanzkante exakt zum gleichen Zeitpunkt erfolgt, was unter Umständen einen saubereren Schnitt ermöglicht. Vor allem wird dadurch der Schnittkraftverlauf begünstigt.

Die Stirnfläche muss auch nicht in einer Ebene liegen, sie kann leicht von dieser Ebene abweichen, beispielsweise zwei unter einem Winkel verlaufende ebene Teile aufweisen oder auch gekrümmt verlaufen.

Es wurde eingangs bereits erwähnt, dass das Blindbefestigungselement eine Werkzeugangriffsausbildung zum Durchführen des Stanzvorgangs und eine Werkzeugangriffsausbildung zum Durchführen des sich an den Stanzvorgang anschließenden Befestigungsvorgangs aufweist. Für beide Vorgänge kann unter Umständen ein einziges Werkzeug vorgesehen sein, beispielsweise ein Bit.

Bei dem Befestigungsvorgang handelt es sich um ein Drehen. Während der Stanzvorgang immer ein in Längsrichtung des Befestigungselements verlaufender geradliniger Vorgang ist, handelt es sich also bei dem Befestigungsvorgang um einen Vorgang in einer anderen Richtung. Entsprechend weist das Befestigungselement eine Werkzeugangriffsausbildung auf, mit der das Befestigungselement verdreht werden kann. Es kann sich dabei um die üblichen Schraubenantriebsausbildungen in Form von Vorsprüngen oder Vertiefungen handeln.

In Weiterbildung der Erfindung kann vorgesehen sein, dass der Schaft mindestens teilweise glatt und zylindrisch ausgebildet ist. Die ist insbesondere dann der Fall, wenn der Befestigungsvorgang durch Schlagen oder Ziehen erfolgt.

Es wurde eingangs erwähnt, dass der Querschnitt des Stanzendes kreisförmig sein kann, aber auch von der Kreisform abweichen kann. Die Erfindung schlägt vor, dass der Schaft des Befestigungselements mindestens teilweise einen Kreisquerschnitt aufweisen kann.

Es ist aber ebenfalls möglich und wird von der Erfindung vorgeschlagen, dass der Schaft mindestens teilweise einen von der Kreisform abweichenden Querschnitt aufweist, beispielsweise die Form eines Mehrecks mit stark abgerundeten Ecken, was bei einer angenäherten Dreieckform auch unter den Begriff trilobular bekannt ist.

Erfindungsgemäß kann vorgesehen sein, dass der Kopf des Befestigungselements, der Schaft und das Stanzende ein einstückiges Bauteil bilden.

Es ist aber ebenfalls möglich, dass das Stanzende ein von dem Schaft und dem Kopf getrenntes mit diesem verbundenes Bauteil ist. Dies ist insbesondere dann sinnvoll, wenn man aus bestimmten Gründen für das Stanzende ein anderes oder ein anders behandeltes Material verwenden will.

Die Werkzeugangriffsausbildung zum Durchführen des Stanzvorgangs ist vorzugsweise eine quer zur Achse des Befestigungselements verlaufende Oberfläche des Kopfs des Befestigungselements.

Bei dem Kopf des Befestigungselements kann es sich um einen Kopf handeln, wie er bei Schrauben bekannt ist, also beispielsweise um einen Sechskantkopf mit einer ebenen Unterseite, die eine Anlagefläche bildet. Aber auch ein Senkkopf ist möglich, der dann beim Einschrauben versenkt werden kann.

Die Erfindung schlägt ebenfalls ein Verfahren mit den Merkmalen des unabhängigen Verfahrensanspruchs vor. Das Befestigungselement wird dabei so verwendet, dass mit seinem Stanzende durch einen schlagartigen Vorschub ein Loch in den zu verbindenden Gegenständen eingestanzt wird, dass dieses Loch durch einen weiteren Vorschub des Befestigungselements erweitert wird, dass der Vorschub dann beendet wird, wenn das Gewinde des Schafts in das Loch gelangt, und dass dann das Befestigungselement bis zur Anlage seines Kopfs mit seiner Unterseite befestigt wird. Dabei wird der weitere Vorschub während des Einschraubens nur durch den Befestigungsvorgang, beispielsweise den Einschraubvorgang bestimmt.

Insbesondere kann dabei vorgesehen sein, dass der schlagartige Vorschub derart abgestimmt wird, dass der Vorschub dann endet, wenn der Gewindeabschnitt das Loch erreicht.

Es kann auch vorgesehen sein, dass der Einschraubvorgang schon während des geradlinigen Vorschubs beginnt, so dass sich die beiden Bewegungen zeitlich überlappen.

Falls es sich bei dem Kopf des Befestigungselements um einen Senkkopf handelt, kann der Einschraubvorgang auch soweit erfolgen, bis die Oberseite des Befestigungskopfs bündig mit der Oberfläche des oberen der beiden zu verbindenden Gegenständen verläuft.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: die Seitenansicht eines ersten Befestigungselements nach der Erfindung;
- Figur 2: in vergrößertem Maßstab das Stanzende eines zweiten Befestigungselements;
- Figur 3: eine Seitenansicht des Stanzendes mit einer konvex gekrümmten Stirnfläche;
- Figur 4: die Seitenansicht des Stanzendes mit einer konkav gekrümmten Stirnfläche;
- Figur 5: die Seitenansicht des Stanzendes mit einer schräg verlaufenden Stirnfläche;
- Figur 6: die Stirnfläche mit einer fast vollständig geschlossenen Stanzkante;
- Figur 7: eine der Figur 2 entsprechende Darstellung bei einer weiteren Ausführungsform;
- Figur 8: eine der Figur 7 entsprechende Darstellung bei einer nochmals weiteren Ausführungsform;
- Figur 9: das vordere Stanzende in einer abgeänderten Ausführungsform.

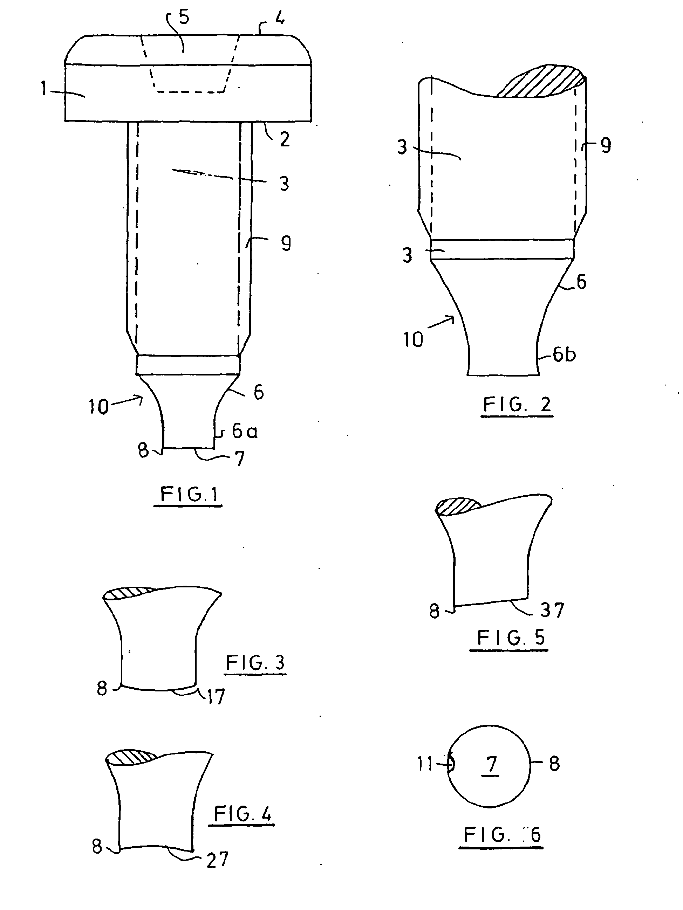

Figur 1 zeigt in einer vereinfachten Seitenansicht ein erstes Befestigungselement, das an seinem einen Ende einen Kopf 1 aufweist. Dieser Kopf 1 enthält eine in einer Ebene liegende Unterseite 2, an die sich ein Schaft 3 anschließt. Auf der der Unterseite 2 gegenüberliegenden Oberseite 4 des Kopfs ist eine ebene Fläche gebildet. Von dieser ebenen Fläche ausgehend erstreckt sich in den Kopf 1 hinein eine gestrichelt angedeutete Vertiefung 5, die die Form einer üblichen Schraubenantriebsausbildung aufweist. Die Oberseite 4 des Kopfs kann auch eine andere Form aufweisen, beispielsweise konvex gekrümmt sein.

Im Bereich des dem Kopf 1 des Befestigungselements abgewandten Endes geht der Schraubenschaft 3 über einen konkav gewölbten Abschnitt 6 in eine vordere Stirnfläche 7 über. Diese Stirnfläche 7 weist eine umlaufende Kante 8 auf, die als Stanzkante ausgebildet ist. Dies bedeutet, dass sie so scharfkantig ausgebildet ist, dass sie beim Aufschlagen dieses Stanzendes des Befestigungselements das Material stanzen kann. Die Scharfkantigkeit ist also abhängig von der Art des Materials, das gestanzt werden soll, und von der Aufschlagbewegung.

Von dem Kopf 1 des Befestigungselements ausgehend weist der Schaft 3 ein Gewinde 9 auf, das angedeutet ist. Es endet kurz vor dem zylindrischen Teil des Schafts3.

Dieses Befestigungselement ist dazu bestimmt, durch Stanzen ein Loch in dem Material, dem gegenüber eine Befestigung erfolgen soll, herzustellen. Das Stanzen geschieht durch eine schlagartige Bewegung, die durch ein Werkzeug auf das Befestigungselement übertragen wird. Hierzu dient die Oberseite 4 des Kopfs 1. Diese Oberseite 4 bildet also eine Angriffsausbildung für ein Werkzeug, das den Stanzvorgang durchführen soll.

Die eigentliche Befestigung in dem Material, dem gegenüber die Befestigung erfolgen soll, geschieht dann durch Verdrehung des Befestigungselements, wobei dann das Befestigungselement mithilfe des Gewindes 9 eingeschraubt wird. Um eine Drehbewegung für die Schraubbewegung auf das Befestigungselement ausüben zu können, ist bei der dargestellten Ausführungsform die Vertiefung 5 vorgesehen, die also die Angriffsausbildung für ein Werkzeug zum Durchführen des Befestigungsvorgangs bildet. Selbstverständlich es ist auch möglich, dass der Kopf des Befestigungselements als Mehrkantkopf, insbesondere als Sechskantkopf, ausgebildet ist.

Die vordere ebene Stirnfläche 7 verläuft in dem in Figur 1 dargestellten Ausführungsbeispiel in einer Ebene, die senkrecht zur längsachse des Befestigungselements verläuft.

Direkt hinter der Stirnfläche 7 und damit auch direkt hinter der Stanzkante 8 verläuft das Stanzende 10 zunächst in einem zylindrischen Abschnitt 6a oder mit einem leichten Hinterschnitt, von wo aus die Kontur dann konkav gekrümmt bis zu dem Schaft 3 verläuft.

Figur 2 zeigt nur das vordere Stanzende 10 bei einer leicht abgeänderten Ausführungsform. Wiederum verläuft die Stirnfläche 7 mit der Stanzkante 8 in einer Ebene, die senkrecht zur längsachse des Befestigungselements verläuft. Unmittelbar hinter der Stirnfläche 7 verringert sich der Durchmesser und damit der Querschnitt in einem ersten Bereich 6b. Der Übergang zwischen der Stirnfläche 7 und dem Schaft 3 geschieht also in einer konkaven Form mit einem Hinterschnitt hinter der Stirnfläche 7.

Sowohl bei der Ausführungsform nach Figur 1 als auch bei der Ausführungsform nach Figur 2 ist die Stirnfläche 7 eine ebene Fläche, die senkrecht zur längsachse des Befestigungselements verläuft. In Abwandlung zeigt die Figur 3 das Stanzende einer weiteren Ausführungsform, bei der die Stirnfläche 17 konvex gekrümmt ist, wobei diese Stirnfläche 17 immer noch angenähert senkrecht zur längsachse verläuft.

Eine entsprechend umgekehrt gebogene Stirnfläche 27 zeigt die Figur 4.

Die Figur 5 zeigt nun eine Abwandlung in der Weise, dass die vordere Stirnfläche 37 zwar wieder als ebene Flächen ausgebildet ist, wie bei der Ausführungsform nach Figur 1 und Figur 2, wobei jetzt diese ebene Fläche aber leicht schräg gegenüber der Art der Stirnfläche der Figur 1 und 2 angeordnet ist. Hier beginnt der Stanzvorgang also in Figur 5 an der linken Seite, so dass die Stanzkante nicht an allen Stellen gleichzeitig die Stanzung durchführt.

Figur 6 zeigt die Stirnfläche 7 mit der Stanzkante 8. Die Stanzkante 8 verläuft längs einer im Wesentlichen geschlossenen linie und ist nur an einer Stelle 11 in der Weise unterbrochen, dass dort der Übergang zwischen der Mantelfläche und der Stirnfläche abgerundet verläuft. Damit soll erreicht werden, dass der beim Stanzvorgang ausgestanzte Teil an dem Material an einer Stelle hängenbleibt, die so schmal ist, dass er umgebogen wird, aber nicht abreißt.

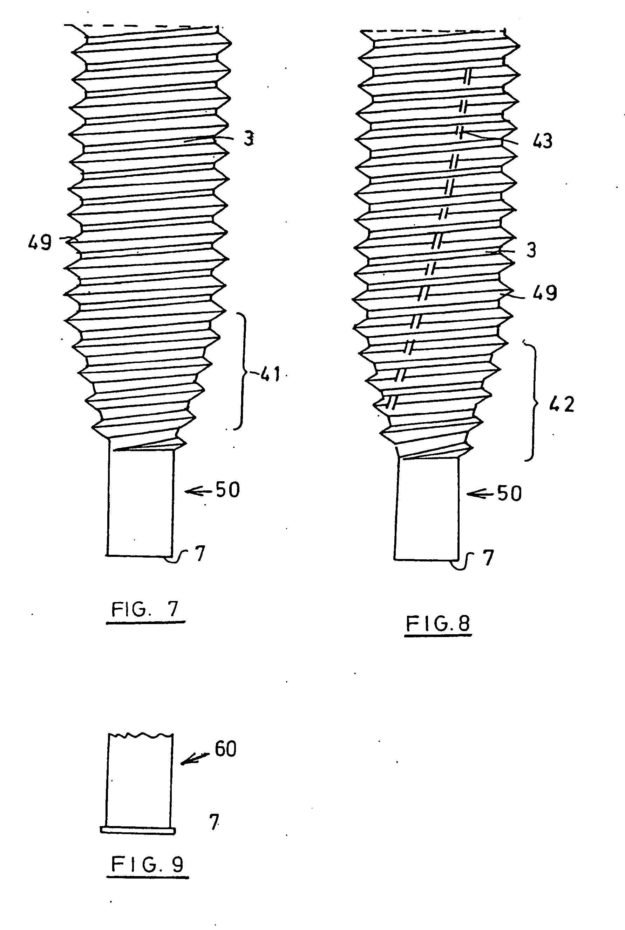

Während bei den bisherigen Ausführungsformen der Übergangsbereich zwischen dem Stanzende und dem zylindrischen Schaft 3 glatt ausgebildet ist, zeigen die Figuren 7 und 8 Ausführungsformen, bei denen der Übergangsbereich 41 zwischen dem Schaft 3 und dem Stanzende 50 ebenfalls mit einem Gewinde 49 versehen ist. Mit anderen Sorten geht das Gewinde von dem Schaft 3 bis zum Ende des Übergangsbereichs 41, wo das Gewinde 49 endet oder je nach Betrachtungsweise beginnt. Damit kann dann, sobald das Gewinde 49 das Loch erreicht, an dieser Stelle schon eine Vergrößerung des gestanzten Lochs durch den Schraubvorgang erfolgen.

Der Übergangsbereich 41 kann jede der bisher beschriebenen und dargestellten Grundformen aufweisen, die unter Bezugnahme auf die Figuren 1 bis 4 dargestellt wurden. Das gleiche gilt auch für das Stanzende 50 selbst und dessen Stirnläche 7. Bei der in Figur 7 dargestellten Ausführungsformen verläuft die Kontur des Übergangsbereichs 41 konvex.

Figur 8 zeigt eine Ausführungsform, wo der Übergangsbereich 42 konisch verläuft. Die in Figur 8 dargestellte Ausführungsform unterscheidet sich von der nach Figur 7 unter anderem auch darin, dass über das Gewinde eine Schabenut 43 ausgebildet ist, die leicht schräg gegenüber der Längsachse des Befestigungselements verläuft. Damit kann erreicht werden, dass zur Bildung des Gewindes auch ein Schneidvorgang erfolgt.

Figur 9 zeigt nochmals eine weitere Ausführungsform eines Stanzendes 60. Unmittelbar an die Stirnfläche 7 anschließend ist eine Art Platte gebildet, hinter der sich der Durchmesser des Stanzendes stufenartig verringert. Hier ist also ein stufenartiger Hinterschnitt gebildet.

Befestigungselemente, wie sie in Figur 7 und 8 dargestellt sind, können mit beliebigen Stirnflächen und mit beliebigen Befestigungselementköpfen kombiniert sein.

Das Befestigungselement kann zur Befestigung von unterschiedlichen Materialien aneinander, beispielsweise Blech auf Blech, von Blech auf Holz und Blech auf Kunststoff dienen. Es kann vorgesehen sein, für die unterschiedlichsten Anwendungsfälle unterschiedliche Gewindeformen zu verwenden.

Bei den dargestellten Ausführungsformen reicht das Schraubengewinde am Schaft bis zur Unterseite des Schraubenkopfs beziehungsweise eines Senkkopfs. Dies ist nicht erforderlich. Es kann auch ausreichen, wenn das Gewinde sich beispielsweise nur über die Hälfte des Schafts erstreckt. Die Ausgestaltung, bei der das Gewinde nicht bis zur Unterseite des Kopfs reicht, ist insbesondere dann von Vorteil, wenn damit das näher an dem Kopf des Befestigungselements vorhandene Blech an die Unterlage gezogen werden soll.

## Patentansprüche

1. Blindbefestigungselement zur Befestigung von Gegenständen aneinander, mit einem Schaft (3), einem an dem einen Ende des Schafts (3) ausgebildeten Kopf (1), der an seiner dem Schaft (3) zugewandten Unterseite (2) eine Anlagefläche aufweist, einem selbstschneidenden Gewinde (9) auf dem Schaft (3), um diese Gegenstände miteinander zu verbinden, einem an dem gegenüberliegenden vorderen Ende des Schafts (3) ausgebildeten Stanzende (10, 50, 60) zum Stanzen eines Lochs sowie einem Übergangsbereich zwischen dem Stanzende und dem Schaft, um das Loch zu erweitern, einer Werkzeugangriffsausbildung zum Durchführen eines Stanzvorgangs, um einen definierten Teil des Materials auszustanzen, sowie mit einer Werkzeugangriffsausbildung zum Durchführen eines Drehvorgangs, insbesondere einer Schraubenantriebsausbildung.

2. Blindbefestigungselement nach Anspruch 1, bei dem das Stanzende (10, 50, 60) eine quer verlaufende Stirnfläche (7, 17, 27, 37) aufweist, die von einer im Wesentlichen vollständigen Stanzkante (8) begrenzt ist.

3. Blindbefestigungselement nach Anspruch 2, bei dem der Durchmesser der Stirnfläche (7, 17, 27, 37) zwischen etwa 30% und 70 %, vorzugsweise zwischen etwa 60% und etwa 40% des Durchmessers des Schafts (3) liegt.

4. Blindbefestigungselement nach einem der vorhergehenden Ansprüche, bei dem das Stanzende (10, 50, 60) hinter der Stirnfläche (7, 17, 27, 37) einen zylindrisch verlaufenden Abschnitt (6a) aufweist.

5. Blindbefestigungselement nach einem der Ansprüche 1 bis 3, bei dem das Stanzende (10, 50, 60) hinter der Stirnfläche (7, 17, 27, 37) einen hinterschnittenen Abschnitt (6b) aufweist.

6. Blindbefestigungselement nach einem der vorhergehenden Ansprüche, bei dem der Übergang zwischen der Stirnfläche des Stanzendes und dem Schaft (3) mindestens teilweise konisch ausgebildet ist.

7. Blindbefestigungselement nach einem der vorhergehenden Ansprüche, bei dem der Übergang zwischen der Stirnfläche des Stanzendes und dem Schaft (3) mindestens teilweise konkav verläuft.

8. Blindbefestigungselement nach einem der vorhergehenden Ansprüche, bei dem die vordere Stirnfläche (7, 37) in einer Ebene liegt.

9. Blindbefestigungselement nach einem der vorhergehenden Ansprüche, bei dem die vordere Stirnfläche (37) in einer leicht schräg gegenüber einer Querebene verlaufenden Ebene liegt.

10. Blindbefestigungselement nach einem der Ansprüche 1 bis 7, bei dem die Stanzkante (8) gegenüber einer Ebene geringfügig abweicht.

11. Blindbefestigungselement nach einem der vorhergehenden Ansprüche, bei dem der Schaft (3) mindestens teilweise glatt und zylindrisch ausgebildet ist.

12. Blindbefestigungselement nach einem der vorangehenden Ansprüche, bei dem das Gewinde sich über den Übergangsbereich zwischen dem Stanzende und dem Schaft (3) erstreckt.

13. Blindbefestigungselement nach Anspruch 12 mit mindestens einer Schabenut (43).

14. Blindbefestigungselement nach einem der vorhergehenden Ansprüche, bei dem der Schaft (3) mindestens teilweise einen Kreisquerschnitt aufweist.

15. Blindbefestigungselement nach einem der vorhergehenden Ansprüche, bei dem der Schaft (3) mindestens teilweise einen trilobularen Querschnitt aufweist.

16. Blindbefestigungselement nach einem der vorhergehenden Ansprüche, bei dem der Schaft, der Kopf und das Stanzende ein einstückiges Bauteil bilden.

17. Blindbefestigungselement nach einem der Ansprüche 1 bis 15, bei dem das Stanzende (30, 40) ein von dem Schaft (3) getrenntes, mit diesem verbundenes Bauteil ist.

18. Blindbefestigungselement nach einem der vorhergehenden Ansprüche, bei dem die Werkzeugangriffsausbildung zum Durchführen des Stanzvorgangs eine quer zur Achse des Befestigungselements verlaufende Oberfläche (4) des Kopfs (1) des Befestigungselements ist.

19. Blindbefestigungselement nach einem der vorhergehenden Ansprüche, bei dem der Kopf (1) an seiner Unterseite (2) eine ebene Anlageschulter aufweist.

20. Blindbefestigungselement nach einem der Ansprüche 1 bis 18, bei dem der Kopf des Befestigungselements ein Senkkopf ist.

21. Blindbefestigungselement nach einem der Ansprüche 1 bis 19, bei dem der Kopf des Befestigungselements ein Mehrkantkopf, insbesondere ein Sechskantkopf ist.

22. Verfahren zum Setzen eines Befestigungselements nach einem der vorhergehenden Ansprüche, mit folgenden Verfahrensschritten:
Bereitstellen von aneinander zu befestigenden Gegenständen,
Bereitstellen eines Befestigungselements nach einem der vorangehenden Ansprüche, mit dem Stanzende (10, 50, 60) des Befestigungselements wird durch einen schlagartigen Vorschub ein Loch in den zu verbindenden Gegenständen (23, 24) eingestanzt, um einen definierten Teil des Materials auszustanzen,
das Loch wird durch einen weiteren Vorschub des Befestigungselements erweitert,
der Vorschub wird beendet, sobald das Gewinde (9) des Schafts (3) an oder in das Loch gelangt,
das Befestigungselement wird unter Bildung eines Gewindes eingeschraubt, um die Gegenstände miteinander zu verbinden.

23. Verfahren nach Anspruch 22, bei dem der schlagartige Vorschub derart abgestimmt wird, dass dann, wenn der Gewindeabschnitt (9) das Loch erreicht, der Vorschub endet.

24. Verfahren nach Anspruch 22 oder 23, bei dem die Vorgänge des schlagartigen Vorschubs und des Schraubens sich zeitlich überlappen.

25. Verfahren nach einem der Ansprüche 22 bis 24, bei dem das Befestigungselement bis zur Anlage seines Kopfs (1) und/oder bis zur Bildung einer Ansenkung durch einen Senkkopf des Befestigungselements eingeschraubt wird.

26. Verfahren nach Anspruch 24 oder 25, bei dem bereits zu Beginn des schlagartigen Vorschubs das Befestigungselement in Drehbewegung versetzt wird.

## Claims

1. A blind fastening element for fastening objects to each other, having a shaft (3), a head (1) which is formed at one end of the shaft (3) and has a contact face on its underside (2) facing the shaft (3), a self-cutting thread (9) on the shaft (3) for connecting the said objects to each other, a punch end (10, 50, 60) formed at the opposite front end of the shaft (3) for punching a hole and a transition region between the punch end and the shaft for widening the hole, a tool engagement formation for carrying out a punching process, for punching out a defined portion of the material, and having a tool engagement formation for carrying out a turning process, in particular a screwdriving formation.

2. The blind fastening element according to claim 1, in which the punch end (10, 50, 60) has a transverse end face (7, 17, 27, 37) which is delimited by an essentially complete punch edge (8).

3. The blind fastening element according to claim 2, in which the diameter of the end face (7, 17, 27, 37) is between approximately 30% and 70%, preferably between approximately 60% and approximately 40% of the diameter of the shaft (3).

4. The blind fastening element according to one of the preceding claims, in which the punch end (10, 50, 60) has a cylindrical section (6a) behind the end face (7, 17, 27, 37).

5. The blind fastening element according to one of claims 1 to 3, in which the punch end (10, 50, 60) has an undercut section (6b) behind the end face (7, 17, 27, 37).

6. The blind fastening element according to one of the preceding claims, in which the transition between the end face of the punch end and the shaft (3) is at least partially conical.

7. The blind fastening element according to one of the preceding claims, in which the transition between the end face of the punch end and the shaft (3) is at least partially concave.

8. The blind fastening element according to one of the preceding claims, in which the front end face (7, 37) lies in one plane.

9. The blind fastening element according to one of the preceding claims, in which the front end face (37) lies in a plane which runs slightly obliquely to a transverse plane.

10. The blind fastening element according to one of claims 1 to 7, in which the punch edge (8) deviates slightly from a plane.

11. The blind fastening element according to one of the preceding claims, in which the shaft (3) is at least partially smooth and cylindrical.

12. The blind fastening element according to one of the preceding claims, in which the thread extends over the transition region between the punch end and the shaft (3).

13. The blind fastening element according to claim 12, having at least one tapping point (43).

14. The blind fastening element according to one of the preceding claims, in which the shaft (3) has at least partially a circular cross section.

15. The blind fastening element according to one of the preceding claims, in which the shaft (3) has at least partially a trilobular cross section.

16. The blind fastening element according to one of the preceding claims, in which the shaft, the head and the punch end form a single-piece component.

17. The blind fastening element according to one of claims 1 to 15, in which the punch end (30, 40) is a component which is separated from the shaft (3) and connected to the latter.

18. The blind fastening element according to one of the preceding claims, in which the tool engagement formation for carrying out the punching process is a surface (4) of the head (1) of the fastening element which runs transversely to the axis of the fastening element.

19. The blind fastening element according to one of the preceding claims, in which the head (1) has a flat contact shoulder on its underside (2).

20. The blind fastening element according to one of claims 1 to 18, in which the head of the fastening element is a countersunk head.

21. The blind fastening element according to one of claims 1 to 19, in which the head of the fastening element is a polygonal head, in particular a hexagonal head.

22. A method for setting a fastening element according to one of the preceding claims, having the following method steps:
provision of objects to be fastened to each other,
provision of a fastening element according to one of the preceding claims,
a hole is punched in the objects (23, 24) to be connected by means of a sudden advance with the punch end (10, 50, 60) of the fastening element, in order to punch out a defined portion of the material,
the hole is widened by a further advance of the fastening element,
the advance is ended as soon as the thread (9) of the shaft (3) arrives at or into the hole,
the fastening element is screwed in, forming a thread, in order to connect the objects with each other.

23. The method according to claim 22, in which the sudden advance is configured in such a manner that when the threaded section (9) reaches the hole, the advance ends.

24. The method according to claim 22 or 23, in which the processes of the sudden advance and the screwing overlap in time.

25. The method according to one of claims 22 to 24, in which the fastening element is screwed in until the head (1) thereof makes contact and/or until a countersink is formed by a countersunk head of the fastening element.

26. The method according to claim 24 or 25, in which the fastening element is set in rotation already at the start of the sudden advance.

## Revendications

1. Élément de fixation aveugle pour la fixation d'objets les uns aux autres, avec une tige (3), une tête (1) formée à l'une des extrémités de la tige (3), qui présente une surface d'appui de son côté inférieur (2) tourné vers la tige (3), un filetage auto-taraudeur (9) sur la tige (3), pour relier ces objets les uns aux autres, une extrémité perforatrice (10, 50, 60) formée à l'extrémité avant opposée de la tige (3), pour la perforation d'un trou, ainsi qu'une zone de transition entre l'extrémité perforatrice et la tige, pour agrandir le trou, une formation de prise d'outil pour l'exécution d'une opération de découpage, permettant de découper une partie définie du matériau, ainsi qu'avec une formation de prise d'outil pour l'exécution d'une opération de rotation, en particulier une formation d'entraînement à vis.

2. Élément de fixation aveugle selon la revendication 1, dans lequel l'extrémité perforatrice (10, 50, 60) comporte une surface frontale (7, 17, 27, 37) s'étendant transversalement, qui est délimitée par un bord de découpage (8) quasiment complet.

3. Élément de fixation aveugle selon la revendication 2, dans lequel le diamètre de la surface frontale (7, 17, 27, 37) mesure entre environ 30% et 70%, de préférence entre environ 60% et environ 40% du diamètre de la tige (3).

4. Élément de fixation aveugle selon l'une des revendications précédentes, dans lequel l'extrémité perforatrice (10, 50, 60) comporte une section (6a) cylindrique derrière la surface frontale (7, 17, 27, 37).

5. Élément de fixation selon l'une des revendications 1 à 3, dans lequel l'extrémité perforatrice (10, 50, 60) comporte une section contre-dépouillée (6b) derrière la surface frontale (7, 17, 27, 37).

6. Élément de fixation selon l'une des revendications précédentes, dans lequel la transition entre la surface frontale de l'extrémité perforatrice et la tige (3) est formée de façon au moins partiellement conique.

7. Élément de fixation selon l'une des revendications précédentes, dans lequel la transition entre la surface frontale de l'extrémité perforatrice et la tige (3) est formée de façon au moins partiellement concave.

8. Élément de fixation aveugle selon l'une des revendications précédentes, dans lequel la surface frontale avant (7, 37) s'étend dans un plan.

9. Élément de fixation aveugle selon l'une des revendications précédentes, dans lequel la surface frontale avant (37) se trouve dans un plan qui s'étend légèrement en biais par rapport à un plan transversal.

10. Élément de fixation aveugle selon l'une des revendications 1 à 7, dans lequel le bord de découpage (8) dévie légèrement par rapport à un plan.

11. Élément de fixation aveugle selon l'une des revendications précédentes, dans lequel la tige (3) est au moins partiellement formée lisse et cylindrique.

12. Élément de fixation aveugle selon l'une des revendications précédentes, dans lequel le filetage s'étend sur la zone de transition entre l'extrémité perforatrice et la tige (3).

13. Élément de fixation aveugle selon la revendication 12, avec au moins une rainure de grattage (43).

14. Élément de fixation aveugle selon l'une des revendications précédentes, dans lequel la tige (3) présente une section transversale au moins partiellement circulaire.

15. Élément de fixation aveugle selon l'une des revendications précédentes, dans lequel la tige (3) présente une section transversale au moins partiellement tri-lobulaire.

16. Élément de fixation aveugle selon l'une des revendications précédentes, dans lequel la tige, la tête et l'extrémité perforatrice forment une pièce intégrale.

17. Élément de fixation aveugle selon l'une des revendications 1 à 15, dans lequel l'extrémité perforatrice (30, 40) est une pièce indépendante de la tige (3), reliée à celle-ci.

18. Élément de fixation aveugle selon l'une des revendications 1 à 15, dans lequel la formation de prise d'outil, destinée à l'exécution de l'opération de découpage, est une surface (4) de la tête (1) de l'élément de fixation, qui s'étend perpendiculairement à l'axe de l'élément de fixation.

19. Élément de fixation aveugle selon l'une des revendications précédentes, dans lequel la tête (1) comporte une épaule d'appui plate sur son côté inférieur (2).

20. Élément de fixation aveugle selon l'une des revendications 1 à 18, dans lequel la tête de l'Élément de fixation est une tête fraisée.

21. Élément de fixation aveugle selon l'une des revendications 1 à 19, dans lequel la tête de l'Élément de fixation est une tête polygonale, en particulier une tête hexagonale.

22. Procédé pour la pose d'un Élément de fixation selon l'une des revendications précédentes, avec les étapes de procédé suivantes :
- mise à disposition d'objets à relier les uns aux autres,
- mise à disposition d'un élément de fixation selon l'une des revendications précédentes,
- une extrémité perforatrice (10, 50, 60) de l'élément de fixation permet de découper un trou dans les objets à relier (23, 24), par une poussée du genre à-coup, afin de découper une partie définie du matériau,
- agrandissement du trou par une poussée supplémentaire de l'élément de fixation,
- arrêt de la poussée dès que le filetage (9) de la tige (3) parvient sur ou dans le trou,
- vissage de l'élément de fixation en formant un filetage, pour relier les objets les uns aux autres.

23. Procédé selon la revendication 22, dans lequel la poussée du genre à-coup est déterminée de manière à ce que la poussée se termine lorsque la section filetée (9) atteint le trou.

24. Procédé selon la revendication 22 ou 23, dans lequel les opérations de poussée par à-coup et de vissage se chevauchent dans le temps.

25. Procédé selon l'une des revendications 22 à 24, dans lequel l'élément de fixation est vissé dans une tête fraisée de l'Élément de fixation jusqu'à l'appui de sa tête (1) et/ou jusqu'à la formation d'un chanfrein.

26. Procédé selon la revendication 24 ou 25, dans lequel l'élément de fixation est mis en rotation dès le début de la poussée du genre à-coup.
